# EUROPÄISCHE PATENTSCHRIFT

(11) **EP 2 034 472 B1**
(45) Veröffentlichungstag und Bekanntmachung des Hinweises auf die Patenterteilung: **20.11.2019**
(21) Anmeldenummer: 08104770.6
(22) Anmeldetag: 16.07.2008
(51) Int. Cl.: G10L 15/193, G10L 15/197, G10L 15/34

(54) **Spracherkennungsverfahren und Spracherkennungsvorrichtung**
Speech recognition method and device
Procédé de reconnaissance vocale et dispositif de reconnaissance vocale

(30) Priorität: 10.09.2007 DE 102007042971
(43) Veröffentlichungstag der Anmeldung: 11.03.2009
(73) Patentinhaber: Svox AG, 8048 Zürich (CH)
(72) Erfinder: Stemmer, Georg, 81825 München (DE)
(74) Vertreter: Kaminski Harmann Patentanwälte AG (Schweiz)

(56) Entgegenhaltungen:
- JONES G J F ET AL: "THE HMM INTERFACE WITH HYBRID GRAMMAR-BIGRAM LANGUAGE MODELS FOR SPEECH RECOGNITION" PROCEEDINGS OF THE INTERNATIONAL CONFERENCE ON SPOKEN LANGUAGE PROCESSING (ICSLP). BANFF, OCT. 12 - 16, 1992; [PROCEEDINGS OF THE INTERNATIONAL CONFERENCE ON SPOKEN LANGUAGE PROCESSING (ICSLP)], EDMONTON, UNIVERITY OF ALBERTA, CA, Bd. -, 12. Oktober 1992 (1992-10-12), Seiten 253-256, XP000850097
- YE-YI WANG ET AL: "A unified context-free grammar and n-gram model for spoken language processing" ACOUSTICS, SPEECH, AND SIGNAL PROCESSING, 2000. ICASSP '00. PROCEEDING S. 2000 IEEE INTERNATIONAL CONFERENCE ON 5-9 JUNE 2000, PISCATAWAY, NJ, USA,IEEE, Bd. 3, 5. Juni 2000 (2000-06-05), Seiten 1639-1642, XP010507670 ISBN: 978-0-7803-6293-2

## Beschreibung

Die vorliegende Erfindung betrifft ein Spracherkennungsverfahren und eine Spracherkennungsvorrichtung, in welchen eingegebenen Sprachdaten ein Ausgangssymbol zugeordnet wird.

Automatische Spracherkennung beschäftigt sich mit der Aufgabe, gesprochene Sprache der automatischen Datenerfassung zugänglich zu machen. Anwendungsbereiche für Spracherkennung bestehen zum einen in Diktiersystemen, in welchen die Spracheingabe mittels Spracherkennung die Verwendung einer Tastatur ersetzt. Zum anderen wird Spracherkennung auch erfolgreich in automatischen Dialogsystemen mit begrenztem Wortschatz, wie zum Beispiel Fahrplanauskunftssystemen, Navigationssystemen oder auch Krankenhausinformationssystemen, verwendet.

Ein Spracherkennungssystem basiert auf einem Suchalgorithmus, bei dem der gesprochenen Eingabe Hypothesen zugeordnet werden, also mögliche Worte oder Ausgangssymbole.

In dieser Suche wird mittels eines Sprachmodells versucht, falsche oder unwahrscheinliche Hypothesen auszuschließen. Schließlich wird die wahrscheinlichste Hypothese als erkanntes Wort oder Phrase ausgegeben.

In der automatischen Spracherkennung werden zwei komplementäre Ansätze (oder Sprachmodelle) unterschieden, mit denen ein Spracherkennungsprogramm Wortfolgen oder Phrasen erkennen oder festlegen kann, nämlich strukturierte Grammatiken und stochastische Grammatiken. Strukturierte Grammatiken werden auch als kontextfreie Grammatiken bezeichnet.

In strukturierten Grammatiken wird jedem Wort seine Funktion innerhalb der Grammatik zugewiesen. Strukturierte Grammatiken haben den Vorteil, dass sie aus im Wesentlichen kontextfreien Regeln bestehen, die bei entsprechender Aufgabenstellung effizient vom Entwickler festgelegt werden. Aufgrund der erforderlichen grammatischen Analyse der Äußerung sind sie jedoch in der Regel auf einen begrenzten Wortschatz und Spezialanwendungen beschränkt.

Mit stochastischen Grammatiken wird dagegen die Auftrittswahrscheinlichkeit von Wortkombinationen gewonnen. In einer Bi- oder Trigrammstatistik (allgemein: N-Gramm-Statistik) ist die Auftrittswahrscheinlichkeit von Wortkombinationen aus zwei bzw. drei (allgemein: n) Wörtern gespeichert. Diese Statistiken werden aus Beispieltexten, so genannten Textkorpora gewonnen. Stochastische Grammatiken erlauben eine akkurate Gewichtung von Wortfolgen und führen somit zu einer höheren Erkennungsgenauigkeit, allerdings müssen sie aufwändig mit statistischen Methoden aus Textkorpora geschätzt werden.

Das Arbeitspapier "Stochastic Language Models (N-Gram) Specification", W3C Working Draft 3 January 2001, (http://www.w3.org/TR/ngram-spec/#S9) schlägt drei Möglichkeiten vor, strukturierte und stochastische Grammatiken zu kombinieren: Die erste Möglichkeit wendet während des Spracherkennungsvorgangs nur die stochastische Grammatik an und die strukturierte Grammatik in einem nachfolgenden Verarbeitungsschritt. Die zweite Möglichkeit integriert N-Gram-Regeln in verschiedene Stufen einer kontextfreien Grammatik. Die dritte Möglichkeit verwendet eine kontextfreie Grammatik um die Struktur von Phrasen in einer übergeordneten N-Gramm-Grammatik zu modellieren.

G.J.F. Jones, J.H. Wright & E.N. Wrigley, "The HMMInterface with Hybrid Grammar-Bigram Language Models for Speech Recognition", Proceedings of the International Conference on Spoken Language Processing (ICSLP), Banff, Oct. 12 - 16, 1992, Seiten 253-256 beschreibt die Verbesserung eines hybriden Modells aus einer probabilistischen kontext-freien Grammatik (PCFG) und einer Bigram-Grammatik. Der grundlegende Ansatz besteht dabei, diese beiden Modelle parallel zueinander anzuwenden und dann die wahrscheinlichste Hypothese auszuwählen. Die Auswahl erfolgt durch ein automatisches Umschalten zwischen PCFG und Bigram in Abhängigkeit davon, welche dieser Grammatiken den höheren Score liefert. Mit anderen Worten, die zwei Grammatiken werden parallel zueinander ausgeführt, die Ergebnisse (Scores der jeweiligen Hypothesen) werden miteinander verglichen und es wird die Hypothese mit dem höchsten Score ausgewählt.

Y.Wang, M. Mahajan et al., "A unified context-free grammar and n-gram model for spoken language processing", Proceedings of IEEE International Conference on Acoustics, Speech and Signal Processing (ICASSP'00), Istanbul (2000), vol. 3, S. 1639-1642 offenbart ein Sprachmodell, welches Aspekte von sowohl regelbasierten (also kontextfreien) als auch datenbasierten Grammatiken aufgreift. In einer n-gram-Grammatik werden statt einzelnen Worten auch strukturierte Klassen zugelassen, die wiederum durch eine kontextfreie Grammatik realisiert werden können.

Trotz den Fortschritten, die in dem Bereich der automatischen Spracherkennung in den letzten Jahrzehnten gemacht wurden, ist die Erkennungsgenauigkeit von herkömmlichen Spracherkennungssystemen noch nicht zufriedenstellend.

Es ist somit eine Aufgabe der vorliegenden Erfindung, eine Vorrichtung und ein Verfahren der eingangs genannten Art zu schaffen, mit denen höhere Erkennungsraten erzielt werden können.

Erfindungsgemäß wird diese Aufgabe durch das in Anspruch 1 angegebene Verfahren bzw. die in Anspruch 11 angegebene Vorrichtung gelöst.

Dementsprechend ist ein Verfahren zur Spracherkennung bereitgestellt, in welchem Sprachdaten mindestens ein Ausgangssymbol zugeordnet wird, wobei das Verfahren die Schritte aufweist:
(a) Empfangen (S10) der Sprachdaten, welche eine zu erkennende gesprochene Äußerung repräsentieren;
(b) Vergleichen (S20) der empfangenen Sprachdaten mit einer Mehrzahl von Referenzdatensätzen und Ermitteln mindestens einer Hypothese, welche einen der Referenzdatensätze repräsentiert;
(c) Ermitteln (S30) eines der Hypothese zugeordneten ersten Grammatik-Scores auf Basis einer kontextfreien Grammatik, für jede der ermittelten Hypothesen;
(d) Ermitteln (S40) eines der Hypothese zugeordneten zweiten Grammatik-Scores auf Basis einer stochastischen Grammatik, für jede der ermittelten Hypothesen;
(e) Verknüpfen (S50) des ersten Grammatik-Scores mit dem zweiten Grammatik-Score zum Ermitteln eines Gesamt-Scores der jeweiligen Hypothese;
(f) Ermitteln (S60) derjenigen Hypothese, die unter den ermittelten Hypothesen den maximalem Gesamt-Score aufweist; und
(g) Ausgeben (S70) der ermittelten Hypothese mit maximalen Gesamt-Score als Ausgangssymbol.

Eine entsprechende Spracherkennungsvorrichtung zur Zuordnung eines Ausgangssymbols zu empfangenen Sprachdaten weist Folgendes auf:
- eine Empfangseinrichtung, welche Sprachdaten empfängt, die eine zu erkennende gesprochene Äußerung repräsentieren;
- eine Wörterbuchdatenbank, in welcher eine Mehrzahl von Referenzdatensätzen gespeichert sind;
- eine Vergleichereinrichtung, welche die empfangenen Sprachdaten mit der Mehrzahl von Referenzdatensätzen vergleicht und mindestens eine Hypothese ermittelt, welche einen der Referenzdatensätze repräsentiert,
- eine erste Grammatik-Analyseeinrichtung, welche auf Basis einer kontextfreien Grammatik einen ersten Grammatik-Score der mindestens einen Hypothese ermittelt;
- eine zweite Grammatik-Analyseeinrichtung, welche auf Basis einer stochastischen Grammatik einen zweiten Grammatik-Score der Hypothese ermittelt;
- eine Verknüpfungseinrichtung, welche den ersten Grammatik-Score mit dem zweiten Grammatik-Score zur Berechnung eines Gesamt-Scores der Hypothese verknüpft;
- eine Entscheidungseinrichtung, welche die Hypothese mit maximalen Gesamt-Score ermittelt und als Ausgangssymbol ausgibt.

Die der vorliegenden Erfindung zugrunde liegende Idee besteht in der parallelen und kombinierten Verwendung zweier Grammatiken, nämlich einer strukturierten (kontextfreien) Grammatik und einer stochastischen (kontextbasierten) Grammatik.

Ein wesentlicher Vorteil dieser erfindungsgemäßen Kombination von strukturierter und stochastischer Grammatik ist es, dass bereits während des Spracherkennungsablaufs beide Grammatiktypen zur Anwendung kommen. Somit werden Wortfolgen, die nicht den Regeln der strukturierten Grammatik entsprechen, frühzeitig eliminiert.

Die Verknüpfung kann beispielsweise eine Multiplikation oder eine UND-Verknüpfung (logische Multiplikation) sein. Somit kann die Kombination von strukturierter und stochastischer Grammatik in einfacher Weise durchgeführt werden. Für eine praktische Anwendung ist es dabei ausreichend, lediglich eine strukturierte Grammatik zu entwerfen und diese mit einer stochastischen Hintergrundgrammatik zu kombinieren.

Die erste Grammatik-Score kann einen vorbestimmten ersten Wert (z.B. "0") annehmen, falls die Hypothese auf Basis der kontextfreien Grammatik als ungrammatisch erkannt wird und einen vorbestimmten zweiten Wert (z.B. "1") annehmen, falls die Hypothese auf Basis der kontextfreien Grammatik als grammatisch erkannt wird.

Die stochastische Grammatik kann eine N-Gram-Grammatik, beispielsweise eine Trigramm-Grammatik sein. Trigramm-Grammatiken liefern akkurate Spracherkennungswerte bei einem noch überschaubaren Umfang der Trigramm-Datenbank.

Ferner ist ein Computerprogramm mit Programmcodemitteln vorgesehen, wobei die Programmcodemittel zur Durchführung des oben beschriebenen Verfahrens ausgebildet sind, wenn das Computerprogramm mit einer Prozessoreinrichtung ausgeführt wird. Das Computerprogramm kann als auf einem Datenträger gespeicherte Programmdatei verkörpert sein. Auf dem Datenträger kann ferner eine Repräsentierung der stochastischen Grammatik gespeichert sein.

Ausführungsbeispiele der Erfindung sind in den schematischen Figuren der Zeichnungen dargestellt und in der nachfolgenden Beschreibung näher erläutert. Es zeigen hier:
- Fig. 1: ein Blockdiagramm ein Blockdiagramm einer Spracherkennungsvorrichtung basierend auf einer strukturierten Grammatik,
- Fig. 2: ein Blockdiagramm einer Spracherkennungsvorrichtung basierend auf einer stochastischen Grammatik,
- Fig. 3: ein Blockdiagramm einer Spracherkennungsvorrichtung basierend auf einer Kombination von strukturierter und stochastischer Grammatik, und
- Fig. 4: ein Flussdiagramm eines Verfahrens gemäß einem erfindungsgemäßen Ausführungsbeispiel.

In den Figuren bezeichnen gleiche Bezugszeichen gleiche oder funktionsgleiche Elemente, Merkmale und Signale.

### Strukturierte Grammatik

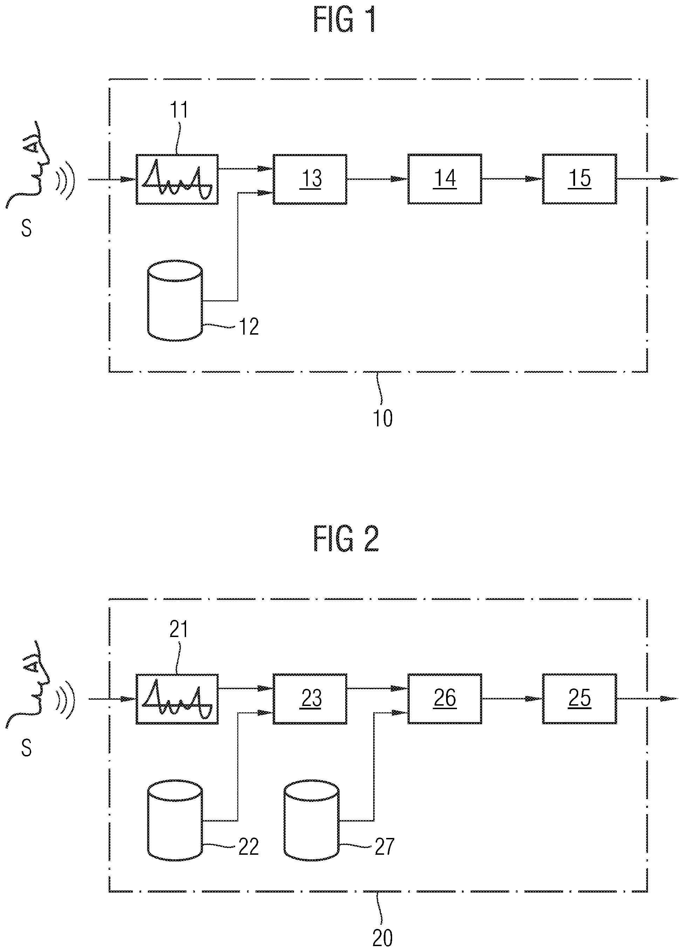

Fig. 1 zeigt ein Blockdiagramm einer Spracherkennungsvorrichtung 10 basierend auf einer strukturierten Grammatik (im Folgenden auch als "kontextfreie Grammatik" oder "CFG-Grammatik" bezeichnet. Die Spracherkennungsvorrichtung 10 weist eine Empfangseinrichtung 11, eine Wörterbuchdatenbank 12, eine Vorverarbeitungseinrichtung 13, eine CFG-Analyseeinrichtung 14 und eine Entscheidungseinrichtung 15 auf.

Die Empfangseinrichtung 11 nimmt die gesprochene Äußerung eines Sprechers S auf. Dazu kann die Empfangseinrichtung 11 beispielsweise ein Mikrophon, welches ein akustisches Signal in ein analoges elektrisches Signal umwandelt, einen Analog-Digital-Wandler, welcher das analoge elektrische Signal in ein digitales Signal umwandelt, sowie einen Speicher aufweisen, in welchem dieses digitale Signal temporär gespeichert und der weiteren Verarbeitung zur Verfügung gestellt wird.

Die Vorverarbeitungseinrichtung 13 nimmt eine Vorverarbeitung der gesprochenen Äußerung vor. Zunächst ermittelt die Vorverarbeitungseinrichtung 13 aus der gesprochenen Äußerung Merkmalsvektoren. Als nächstes vergleicht die Vorverarbeitungseinrichtung 13 die Merkmalsvektoren mit Daten in den Daten in einer Wörterbuchdatenbank 12, um für die Spracheingabe Hypothesen zu ermitteln. Diese Wörterbuchdatenbank 12 enthält Einträge (Referenzdatensätze) zu allen zugelassenen Ausgangssymbolen (z.B. in Textformat) sowie entsprechende Vergleichsdaten (z.B. in spektraler Form), die einen Vergleich mit Merkmalsvektoren und somit die Ermittlung von Hypothesen ermöglichen. Unter Hypothesen werden hierbei (z.B. alphanumerische) Symbole oder Symbolketten verstanden, die den Merkmalsvektoren zugeordnet werden. Dabei werden den einzelnen Hypothesen entsprechend ihrer Übereinstimmung mit den Merkmalsvektoren Wahrscheinlichkeiten zugeordnet und die Vorverarbeitungseinrichtung 13 ermittelt die Hypothesen mit den höchsten Wahrscheinlichkeiten (also mit der größten Übereinstimmung). Diese Wahrscheinlichkeiten basieren also allein auf dem Grad der Übereinstimmung zwischen den Merkmalsvektoren der empfangenen Äußerung und den Einträgen im Wörterbuch 12.

Dies wird anhand eines ersten Beispiels anhand der unten stehenden Tabelle 1 veranschaulicht. Dieses Beispiel geht aus von einer universell einsetzbaren Spracherkennungsvorrichtung mit einem großen Wörterbuch, wie es beispielsweise in einer Diktatsoftware verwendet wird. Hierbei wird angenommen, dass zuvor vom Sprecher S die Worte "Das Wasser ist" eingegeben wurden, diese von der Vorrichtung erkannt wurden, und nun der Sprecher S das Wort "heiß" eingeben möchte und dieses artikuliert. Die Vorverarbeitungseinrichtung 13 vergleicht also das von der Empfangseinrichtung 11 erzeugte digitale Signal mit den Einträgen im Wörterbuch 12 und erzeugt eine Liste mit beispielsweise vier Hypothesen, welche die größte Übereinstimmung mit dem in die Vorverarbeitungseinrichtung 13 eingegebenen Signal zeigen.

**Tabelle 1: Analyse der Eingabe "Das Wasser ist heiß" mit CFG-Grammatik**

| Hypothese | Pa | CFG-Faktor | CFG-Score |
|---|---|---|---|
| Eis | 0.4 | 1 | **0.4** |
| heiß | 0.3 | 1 | 0.3 |
| heißt | 0.2 | 0 | 0.0 |
| weiß | 0.1 | 1 | 0.1 |

Wie in Tabelle 1 dargestellt, umfasst diese Liste die Hypothesen (Symbole) "Eis", "heiß", "heißt" und "weiß", denen jeweils die akustischen Wahrscheinlichkeiten (Pa) 0.4, 0.3, 0.2 bzw. 0.1 zugeordnet sind.

Die von der Vorverarbeitungseinrichtung 13 ermittelten Hypothesen werden nebst den ihnen zugeordneten Wahrscheinlichkeiten der CFG-Analyseeinrichtung 14 zugeführt, welche den Hypothesen jeweils einen CFG-Faktor zuordnet. Falls die Hypothese im Rahmen der kontextfreien Grammatik einen grammatisch korrekten Satz ergibt oder ergeben kann, dann wird der Hypothese der CFG-Faktor "1" zugeordnet, andernfalls wird der Hypothese der CFG-Faktor "0" zugeordnet. Beispielsweise kann das Satzsegment "Das Wasser ist heißt" keinen grammatisch korrekten Satz innerhalb der verwendeten CFG-Grammatik ergeben, weshalb der Hypothese "heißt" der CFG-Faktor "0" zugeordnet wird.

Die CFG-Analyseeinrichtung 14 bestimmt ferner einen CFG-Score (oder Gesamt-Score) durch Multiplikation der akustischen Wahrscheinlichkeit Pa mit dem CFG-Faktor, wie in Tabelle 1 dargestellt ist. Die Entscheidungseinrichtung 15 ermittelt schließlich, welcher der Hypothesen der höchste CFG-Score zugeordnet ist und gibt diese Hypothese als erkanntes Symbol aus. Im vorliegenden Beispiel wird also die Hypothese "Eis" als richtig bewertet und als erkanntes Symbol zur weiteren Verarbeitung ausgegeben. Mit anderen Worten, obwohl vom Sprecher S das Wort "heiß" artikuliert wurde, wird im vorliegenden Beispiel das Wort "Eis" als das wahrscheinlichste ermittelt.

### Stochastische Grammatik

Fig. 2 zeigt ein Blockdiagramm einer Spracherkennungsvorrichtung 20 basierend auf einer stochastischen Grammatik. Die Spracherkennungsvorrichtung 20 weist eine Empfangseinrichtung 21, eine Wörterbuchdatenbank 22, eine Vorverarbeitungseinrichtung 23, eine SG-Analyseeinrichtung 26 ("SG" steht für "stochastische Grammatik"), eine Trigrammdatenbank 27 und eine Entscheidungseinrichtung 25 auf.

Die Funktionen der Empfangseinrichtung 21, der Wörterbuchdatenbank 22, der Vorverarbeitungseinrichtung 23 und der Entscheidungseinrichtung 25 entsprechen denen der Empfangseinrichtung 11, der Wörterbuchdatenbank 12, der Vorverarbeitungseinrichtung 13 und der Entscheidungseinrichtung 15 der auf einer strukturierten Grammatik basierenden Spracherkennungsvorrichtung 10 und werden daher, um Wiederholungen zu vermeiden, im Folgenden nicht näher erläutert.

Die von der Vorverarbeitungseinrichtung 23 ermittelten Hypothesen werden nebst den ihnen zugeordneten Wahrscheinlichkeiten der SG-Analyseeinrichtung 26 zugeführt, welche den Hypothesen jeweils einen SG-Faktor zuordnet, wie in der folgenden Tabelle 2 dargestellt ist:

**Tabelle 2: Analyse der Eingabe "Das Wasser ist heiß" mit stochastischer Grammatik**

| Hypothese | Pa | SG-Faktor | SG-Score |
|---|---|---|---|
| Eis | 0.4 | 0.2 | 0.08 |
| Heiß | 0.3 | 0.6 | **0.18** |
| Heißt | 0.2 | 0.0 | 0.0 |
| Weiß | 0.1 | 0.1 | 0.01 |

Dieser SG-Faktor wird aufgrund einer Trigramm-Analyse der ermittelten Hypothesen bestimmt. Ein Trigramm ist eine Folge von drei Worten (z.B. "Wasser ist heiß" oder "Wasser ist Eis"). In der Trigrammdatenbank 27 sind eine Vielzahl von Trigrammen abgespeichert und jedem der Trigrammen ist eine Häufigkeit zugeordnet. Eine solche Trigrammdatenbank 27 kann beispielsweise durch Analyse eines genügend großen Textkorpus erstellt werden. Anstatt von Trigrammen können auch Bigramme mit Wortfolgen aus zwei Wörtern oder allgemein N-Gramme mit Wortfolgen aus N Wörtern verwendet werden, allerdings hat sich die Verwendung von Trigrammen in der Praxis als vorteilhaft erwiesen.

Aus den Häufigkeiten der Trigramme mit den von der Vorverarbeitungseinrichtung 12 ermittelten Hypothesen (also: "Wasser ist Eis", "Wasser ist heiß" usw.) bestimmt die SG-Analyseeinrichtung 26 jeweils einen SG-Faktor. Der SG-Score (oder Gesamt-Score) für jede Hypothese wird von der SG-Analyseeinrichtung 26 durch Multiplikation der akustischen Wahrscheinlichkeit der Hypothese mit dem SG-Score bestimmt.

Die Entscheidungseinrichtung 25 ermittelt schließlich, welcher der Hypothesen der höchste SG-Score zugeordnet ist und gibt diese Hypothese als erkanntes Symbol aus. Im vorliegenden Beispiel wird also die Hypothese "heiß" als richtig bewertet und ausgegeben.

Wie aus diesem Beispiel ersichtlich ist, kann eine Analyse mit einer Trigramm-Statistik im Rahmen einer Spracherkennung zu vorteilhaften Ergebnissen im Vergleich zu der Verwendung von CFG-Grammatiken führen. Es kann aber auch das Gegenteil der Fall sein, wie anhand des in den Tabellen 3 und 4 dargestellten zweiten Beispiels erläutert wird. Dieses Beispiel geht aus von dem eingegebenen Satz "Wer oft im Wasser ist weiß [dass es darin manchmal kalt ist]". Der Sprecher S hat gerade das Wort "weiß" artikuliert. Es handelt sich also bei den von der CFG-Analyseeinrichtung verwendeten Trigrammen um dieselben Trigramme wie im ersten Beispiel.

**Tabelle 3: Analyse der Eingabe "Wer oft am Wasser ist, weiß ..." mit CFG-Grammatik**

| Hypothese | Wahrscheinlichkeit | CFG-Faktor | CFG-Score |
|---|---|---|---|
| weiß | 0.4 | 1 | **0.4** |
| Eis | 0.3 | 0 | 0.0 |
| heiß | 0.2 | 0 | 0.0 |
| heißt | 0.1 | 1 | 0.1 |

**Tabelle 4: Analyse der Eingabe "Wer oft am Wasser ist, weiß ..." mit stochastischer Grammatik**

| Hypothese | Wahrscheinlichkeit | SG-Faktor | CFG-Score |
|---|---|---|---|
| weiß | 0.4 | 0.1 | 0.04 |
| Eis | 0.3 | 0.2 | 0.06 |
| heiß | 0.2 | 0.6 | **0.12** |
| heißt | 0.1 | 0.0 | 0.0 |

In diesem Beispiel erkennt die auf einer CFG-Grammatik basierende Spracherkennungsvorrichtung 10 das Symbol "weiß" korrekt als Ausgangssymbol, wohingegen die auf einer stochastischen Grammatik basierende Spracherkennungsvorrichtung 20 fälschlicherweise das Symbol "heiß" als Ausgangssymbol erkennt und ausgibt.

### Kombinierte Grammatik

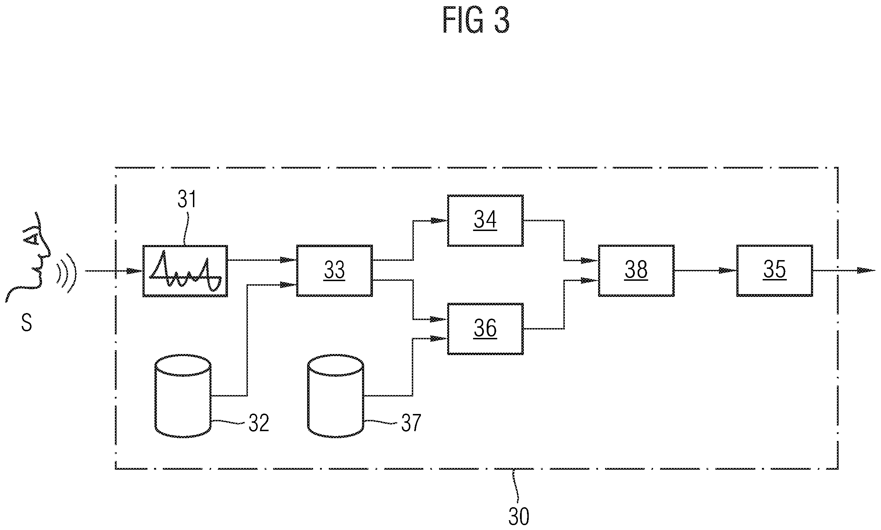

Fig. 3 zeigt ein Blockdiagramm einer Spracherkennungsvorrichtung 30 basierend auf einer Kombination von strukturierter und stochastischer Grammatik. Die Spracherkennungsvorrichtung 30 weist eine Empfangseinrichtung 31, eine Wörterbuchdatenbank 32, eine Vorverarbeitungseinrichtung 33 (Vergleichereinrichtung), eine CFG-Analyseeinrichtung 34, eine SG-Analyseeinrichtung 36, eine Trigrammdatenbank 37, eine Verknüpfungseinrichtung 38 und eine Entscheidungseinrichtung 35 auf.

Die Funktionen der Empfangseinrichtung 31, der Wörterbuchdatenbank 32, der Vorverarbeitungseinrichtung 33 und der Entscheidungseinrichtung 35 entsprechen denen der Empfangseinrichtung 11, der Wörterbuchdatenbank 12, der Vorverarbeitungseinrichtung 13 und der Entscheidungseinrichtung 15 der auf einer strukturierten Grammatik basierenden Spracherkennungsvorrichtung 10.

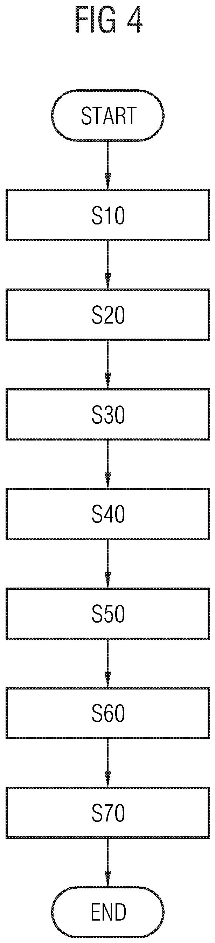

Fig. 4 zeigt ein Flussdiagramm eines Verfahrens gemäß einem erfindungsgemäßen Ausführungsbeispiel.

In Schritt S10 empfängt die Empfangseinrichtung 31 Sprachdaten, die eine von einem Sprecher S gesprochene Äußerung repräsentiert. Wie oben angedeutet, kann die Empfangseinrichtung 11 beispielsweise dazu beispielsweise mit einem Mikrophon ein akustisches Signal in ein analoges elektrisches Signal umwandelt, mit einem Analog-Digital-Wandler das analoge elektrische Signal in ein digitales Signal umwandeln, und dieses digitale Signal in einem (nicht dargestellten Speicher) temporär speichern.

In Schritt S20 vergleicht die Vorverarbeitungseinrichtung 33 die eingegebenen Sprachdaten mit Einträgen im Wörterbuch 32 und ermittelt eine bestimmte Anzahl (z.B. vier) Hypothesen, also Einträge im Wörterbuch 32, die am besten mit den eingegebenen Sprachdaten übereinstimmen, nebst den diesen Hypothesen zugeordneten akustischen Wahrscheinlichkeiten.

In Schritt S30 ordnet die CFG-Analyseeinrichtung 34 den Hypothesen jeweils einen CFG-Faktor (beispielsweise "0" oder "1") zu, und zwar in der oben für die strukturierte Grammatik beschriebenen Weise.

In Schritt S40 bestimmt die SG-Analyseeinrichtung 36 einen SG-Score, und zwar durch Zugriff auf die Trigramm-Datenbank 37, in der oben für die stochastische Grammatik beschriebenen Weise.

In Schritt S50 verknüpft die Verknüpfungseinrichtung 38 für jede Hypothese den CFG-Faktor mit dem SG-Faktor und bestimmt somit einen Gesamt-Faktor. Im vorliegenden Beispiel wird diese Verknüpfung durch eine logische UND-Operation durchgeführt. Dies führt dazu, dass der Gesamt-Faktor derjenigen Hypothesen, die von der CFG-Grammatik als ungrammatisch erkannt wurden, auf "0" gesetzt wird, so dass diese Hypothesen gewissermaßen aussortiert werden. Anstatt einer logischen UND-Operation sind jedoch auch andere Operationen, wie z.B. eine Multiplikation, möglich.

In Schritt S60 bestimmt die Entscheidungseinrichtung 35 für jede Hypothese einen Gesamt-Score durch Multiplikation des Gesamt-Faktors mit der akustischen Wahrscheinlichkeit Pa.

In Schritt S70 ermittelt die Entscheidungseinrichtung 35 schließlich die Hypothese mit dem höchsten Gesamt-Score und gibt diese Hypothese als Ausgangssymbol zur weiteren Verarbeitung aus.

Dies ist in den folgenden Tabellen 5 und 6 für das eingangs genannte erste und zweite Beispiel dargestellt.

**Tabelle 5: Analyse der Eingabe "Das Wasser ist heiß ..." mit kombinierter Grammatik**

| Hypothese | Pa | SG-Faktor | CFG-Faktor | Gesamt-Faktor = SG & CFG | Gesamt-Score |
|---|---|---|---|---|---|
| Eis | 0.4 | 0.2 | 1 | 0.2 | 0.08 |
| heiß | 0.3 | 0.6 | 1 | 0.6 | **0.18** |
| heißt | 0.2 | 0.0 | 0 | 0.0 | 0.0 |
| weiß | 0.1 | 0.1 | 1 | 0.1 | 0.01 |

**Tabelle 6: Analyse der Eingabe "Wer oft am Wasser ist weiß ..." mit kombinierter Grammatik**

| Hypothese | Pa | SG-Faktor | CFG-Faktor | Gesamt-Faktor = SG & CFG | Gesamt-Score |
|---|---|---|---|---|---|
| weiß | 0.4 | 0.1 | 1 | 0.1 | **0.04** |
| Eis | 0.3 | 0.2 | 0 | 0.0 | 0.0 |
| heiß | 0.2 | 0.6 | 0 | 0.0 | 0.0 |
| heißt | 0.1 | 0.0 | 1 | 0.0 | 0.0 |

Wie aus den Tabellen 5 und 6 ersichtlich ist, ermittelt die Spracherkennungsvorrichtung 30 nach dem vorliegenden Ausführungsbeispiel, welcher auf einer Kombination von strukturierter und stochastischer Grammatik-Analyse basiert, für beide Sprachbeispiele das korrekte Ausgangssymbol. Die Spracherkennungsvorrichtung 30 ermöglicht somit eine akkuratere Spracherkennung.

Im vorstehenden Ausführungsbeispiel werden der CFG-Score und der SG-Score unabhängig voneinander ermittelt und können bei geeigneter Auslegung der Spracherkennungsvorrichtung 30 auch parallel also z.B. gleichzeitig ermittelt werden.

Praktisch kann die Spracherkennungsvorrichtung 30 unter Verwendung einer programmgesteuerten Einrichtung realisiert werden. Dazu kann ein Programm, welches das oben beschriebene Verfahren ausführt beispielsweise auf einem Computerterminal mit CPU und Arbeitsspeicher installiert werden. Das Programm wird dann in den Arbeitsspeicher geladen und von der CPU ausgeführt. Auf einem derart eingerichteten Computer entspricht die CPU dann der Vorverarbeitungseinrichtung 33, der CFG-Analyseeinrichtung 34, der SG-Analyseeinrichtung 36, der Verknüpfungseinrichtung 38 und der Entscheidungseinrichtung 35.

Ein solches Programm kann vorteilhafterweise als Programmdatei auf einem Datenträger gespeichert werden. Dabei kann eine Repräsentierung der stochastischen Grammatik und der strukturierten Grammatik auf dem gleichen Datenträger gespeichert sein.

Obgleich die vorliegende Erfindung vorstehend anhand von bevorzugten Ausführungsbeispielen beispielhaft beschrieben wurde, ist sie darauf nicht beschränkt, sondern auf vielfältige Art und Weise modifizierbar.

Beispielsweise wurde das obenstehende Ausführungsbeispiel anhand von Trigrammen erläutert, es ist jedoch selbstverständlich auch für auf Bigrammen oder allgemein auf N-Grammen basierenden Grammatiken anwendbar.

Ferner wurden im obigen Beispiel lediglich Trigramme herangezogen, in denen das letzte Wort dem zu ermittelnden Symbol entsprach. Es ist jedoch auch möglich, Trigramme mit heranzuziehenden, in welchen die Hypothese bzw. das zu ermittelnden Symbol an erster oder mittlerer Stelle im Trigramm steht.

Ferner wurde das obige Ausführungsbeispiels anhand eines "offenen" Systems mit einem großen Wörterbuch erklärt. Die vorliegende Erfindung ist allerdings ebenso anwendbar auf spezielle Anwendungen mit einem kleinen Wörterbuch, z.B. für eine Fahrplanauskunft, Navigationssysteme, Krankenhausinformationssystem oder dergl., mit limitiertem Vokabular. Beispielsweise ist die Anwendung auf ein Buchstabieren mittels Spracherkennung denkbar, in welchem das mögliche Vokabular (also die Wörterbuchdatenbank) im Wesentlichen auf 26 Buchstaben beschränkt ist.

Ferner wurden in oben erläuterten Ausführungsbeispiels stets vier Hypothesen für einen Sprachdatensatz ermittelt. Die Erfindung ist jedoch nicht darauf beschränkt und es ist auch möglich, dass eine andere Anzahl von Hypothesen (z.B. zwei oder mehr) ermittelt wird. Diese Anzahl kann auch für jeden Sprachdatensatz variieren. Es ist also auch möglich, dass lediglich eine einzige Hypothese ermittelt wird, falls eine eindeutige Zuordnung zu einem Eintrag im Wörterbuch möglich ist.

## Patentansprüche

1. Verfahren zur Spracherkennung, in welchem Sprachdaten mindestens ein Ausgangssymbol zugeordnet wird, wobei das Verfahren die Schritte aufweist:
(a) Empfangen (S10) der Sprachdaten, welche eine zu erkennende gesprochene Äußerung repräsentieren;
(b) Vergleichen (S20) der empfangenen Sprachdaten mit einer Mehrzahl von Referenzdatensätzen und Ermitteln mindestens einer Hypothese, welche einen der Referenzdatensätze repräsentiert;
(c) Ermitteln (S30) eines der Hypothese zugeordneten ersten Grammatik-Scores auf Basis einer kontextfreien Grammatik, für jede der ermittelten Hypothesen;
(d) Ermitteln (S40) eines der Hypothese zugeordneten zweiten Grammatik-Scores auf Basis einer stochastischen Grammatik, für jede der ermittelten Hypothesen;
(e) Verknüpfen (S50) des ersten Grammatik-Scores mit dem zweiten Grammatik-Score zum Ermitteln eines Gesamt-Scores der jeweiligen Hypothese;
(f) Ermitteln (S60) derjenigen Hypothese, die unter den ermittelten Hypothesen den maximalem Gesamt-Score aufweist; und
(g) Ausgeben (S70) der ermittelten Hypothese mit maximalem Gesamt-Score als Ausgangssymbol,
**dadurch gekennzeichnet, dass**
der erste Grammatik-Score einen vorbestimmten ersten Wert annimmt, falls die Hypothese auf Basis der kontextfreien Grammatik als ungrammatisch erkannt wird und der erste Grammatik-Score einen vorbestimmten zweiten Wert annimmt, falls die Hypothese auf Basis der kontextfreien Grammatik als grammatisch erkannt wird.

2. Verfahren nach Anspruch 1,
**dadurch gekennzeichnet,**
**dass** die Verknüpfung eine Multiplikation ist.

3. Verfahren nach Anspruch 1,
**dadurch gekennzeichnet,**
**dass** die Verknüpfung eine UND-Verknüpfung ist.

4. Verfahren nach einem der vorhergehenden Ansprüche,
**dadurch gekennzeichnet,**
**dass** die Schritte (c) und (d) unabhängig voneinander durchgeführt werden.

5. Verfahren nach einem der vorhergehenden Ansprüche,
**dadurch gekennzeichnet,**
**dass** die stochastische Grammatik eine N-Gramm-Grammatik, insbesondere eine Trigramm-Grammatik ist.

6. Computerprogramm mit Programmcodemitteln,
**dadurch gekennzeichnet,**
**dass** die Programmcodemittel zur Durchführung des Verfahrens nach einem der vorhergehenden Ansprüche ausgebildet sind, wenn das Computerprogramm mit einer Prozessoreinrichtung ausgeführt wird.

7. Datenträger mit einer darauf gespeicherten Programmdatei, welche ein Computerprogramm nach Anspruch 6 verkörpert.

8. Datenträger nach Anspruch 7,
**dadurch gekennzeichnet,**
**dass** auf dem Datenträger ferner die Repräsentierung der stochastischen Grammatik gespeichert ist.

9. Datenträger nach Anspruch 7,
**dadurch gekennzeichnet,**
**dass** auf dem Datenträger ferner Programmcodemittel zur Erstellung der kontextfreien Grammatik gespeichert sind.

10. Spracherkennungsvorrichtung (30) zur Zuordnung eines Ausgangssymbols zu empfangenen Sprachdaten, wobei die Spracherkennungsvorrichtung (30) folgendes aufweist:
- eine Empfangseinrichtung (31), welche Sprachdaten empfängt, die eine zu erkennende gesprochene Äußerung repräsentieren;
- eine Wörterbuchdatenbank (32), in welcher eine Mehrzahl von Referenzdatensätzen gespeichert sind;
- eine Vergleichereinrichtung (33), welche die empfangenen Sprachdaten mit der Mehrzahl von Referenzdatensätzen vergleicht und mindestens eine Hypothese ermittelt, welche einen der Referenzdatensätze repräsentiert,
- eine erste Grammatik-Analyseeinrichtung (34), welche für jede der ermittelten Hypothesen auf Basis einer kontextfreien Grammatik (34) einen ersten Grammatik-Score der Hypothese ermittelt;
- eine zweite Grammatik-Analyseeinrichtung (36), welche für jede der ermittelten Hypothesen auf Basis einer stochastischen Grammatik einen zweiten Grammatik-Score der Hypothese ermittelt;
- eine Verknüpfungseinrichtung (38), welche für jede der ermittelten Hypothesen den ersten Grammatik-Score mit dem zweiten Grammatik-Score zur Berechnung eines Gesamt-Scores der Hypothese verknüpft;
- eine Entscheidungseinrichtung (35), welche derjenige Hypothese ermittelt, die unter den ermittelten Hypothesen den maximalem Gesamt-Score aufweist, und diese Hypothese als Ausgangssymbol ausgibt,
**dadurch gekennzeichnet, dass**
die erste Grammatik-Analyseeinrichtung (34) den ersten Grammatik-Score als vorbestimmten ersten Wert ermittelt, falls die Hypothese auf Basis der kontextfreien Grammatik als ungrammatisch erkannt wird und den ersten Grammatik-Score als vorbestimmten zweiten Wert ermittelt, falls die Hypothese auf Basis der kontextfreien Grammatik als grammatisch erkannt wird.

11. Vorrichtung nach Anspruch 10,
**dadurch gekennzeichnet,**
**dass** die Verknüpfung eine Multiplikation ist.

12. Vorrichtung nach Anspruch 10,
**dadurch gekennzeichnet,**
**dass** die Verknüpfung eine UND-Verknüpfung ist.

13. Vorrichtung nach einem der Ansprüche 10 bis 12,
**dadurch gekennzeichnet,**
**dass** die stochastische Grammatik eine N-Gramm-Grammatik, insbesondere eine Trigramm-Grammatik ist.

## Claims

1. A method for speech recognition, in which at least one basic symbol is assigned to speech data, the method comprising the steps of:
(a) receiving (S10) the speech data representing a spoken utterance to be recognized;
(b) comparing (S20) the received speech data with a plurality of reference data sets and determining at least one hypothesis representing one of the reference data sets;
(c) determining (S30) a first grammar score associated with the hypothesis based on a context-free grammar, for each of the determined hypotheses;
(d) determining (S40) a second grammar score associated with the hypothesis based on a stochastic grammar, for each of the determined hypotheses;
(e) combining (S50) the first grammar score with the second grammar score to determine a total score of the respective hypothesis;
(f) determining (S60) the hypothesis having the maximum total score among the determined hypotheses; and
(g) outputting (S70) the determined hypothesis with maximum total score as basic symbol,
**characterised in that**
the first grammar score takes on a predetermined first value, if the hypothesis based on the context-free grammar is detected as ungrammatical, and the first grammar score takes on a predetermined second value, if the hypothesis based on the context-free grammar is detected as being grammatical.

2. The method according to claim 1,
**characterised in**
**that** the step of combining is a multiplication.

3. The method according to claim 1,
**characterised in**
**that** the step of combining is an AND combination.

4. The method according to any one of the preceding claims,
**characterised in**
**that** steps (c) and (d) are performed independently of one another.

5. The method according to any one of the preceding claims,
**characterised in**
**that** the stochastic grammar is an N-gram grammar, in particular a trigram grammar.

6. A computer program comprising program code means,
**characterised in**
**that** the program code means are embodied for performing the method according to any one of the preceding claims, when the computer program is run by means of a processor device.

7. A data storage medium comprising a program file stored thereon, which embodies a computer program according to claim 6.

8. The data storage medium according to claim 7,
**characterised in**
**that** the representation of the stochastic grammar is further stored on the data storage medium.

9. The data storage medium according to claim 7,
**characterised in**
**that** program code means for creating the context-free grammar are further stored on the data storage means.

10. A speech recognition device (30) for assigning a basic symbol to received speech data, wherein the speed recognition device (30) is comprising:
- a receiving means (31) for receiving speech data, representing a spoken utterance to be recognized;
- a dictionary database (32), in which a plurality of reference data records is stored;
- a comparing means (33) for comparing the received speech data with the plurality of reference data records and determines at least one hypothesis, which represents one of the reference data records,
- a first grammar analysis device (34), which, for each of the determined hypotheses, determines a first grammar score associated with the hypothesis based on a context-free grammar (34);
- a second grammar analysis device (36), which, for each of the determined hypotheses, determines a second grammar score of the hypothesis based on a stochastic grammar;
- a combining means (38), which, for each of the determined hypotheses, combines the first grammar score to the second grammar score to calculate a total score of the hypothesis;
- a decision device (35), which determines the hypothesis among the determined hypotheses, which has the maximum total score and which outputs this hypothesis as basic symbol,
**characterised in that**
the first grammar analysis device (34) determines the first grammar score as predetermined first value, if the hypothesis based on the context-free grammar is detected as ungrammatical, and determines the first grammar score as predetermined second value, if the hypothesis based on the context-free grammar is detected as being grammatical.

11. The device according to claim 10,
**characterised in**
**that** combining is a multiplication.

12. The device according to claim 10,
**characterised in**
**that** combining is an AND combination.

13. The device according to any one of claims 10 to 12,
**characterised in**
**that** the stochastic grammar is an N-gram grammar, in particular a trigram grammar.

## Revendications

1. Procédé de reconnaissance vocale par lequel au moins un symbole de sortie est attribué à des données vocales, le procédé présentant les étapes suivantes :
(a) réception (S10) des données vocales qui représentent une expression vocale à reconnaître,
(b) comparaison (S20) des données vocales reçues avec une pluralité de jeux de données de référence et identification au moins d'une hypothèse qui représente l'un des jeux de données de référence,
(c) détermination (S30) d'un premier résultat de grammaire attribué à l'hypothèse sur la base d'une grammaire indépendante du contexte, pour chacune des hypothèses identifiées,
(d) détermination (S40) d'un deuxième résultat de grammaire attribué à l'hypothèse sur la base d'une grammaire stochastique, pour chacune des hypothèses identifiées,
(e) liaison (S50) du premier résultat de grammaire avec le deuxième résultat de grammaire pour le calcul d'un résultat total de l'hypothèse respective,
(f) identification (S60) de l'hypothèse qui présente le résultat total maximal parmi les hypothèses identifiées et
(g) émission (S70) de l'hypothèse identifiée ayant le résultat total maximal comme symbole de sortie,
**caractérisé en ce que**
le premier résultat de grammaire adopte une première valeur prédéterminée dans le cas où l'hypothèse est reconnue comme non grammaticale sur la base de la grammaire indépendante du contexte et le premier résultat de grammaire adopte une deuxième valeur prédéterminée dans le cas où l'hypothèse est reconnue comme grammaticale sur la base de la grammaire indépendante du contexte.

2. Procédé conformément à la revendication n°1,
**caractérisé en ce que**
la liaison est une multiplication.

3. Procédé conformément à la revendication n°1,
**caractérisé en ce que**
la liaison est une liaison logique ET.

4. Procédé conformément à l'une des revendications précédentes,
**caractérisé en ce que**
les étapes (c) et (d) sont réalisées indépendamment l'une de l'autre.

5. Procédé conformément à l'une des revendications précédentes,
**caractérisé en ce que**
la grammaire stochastique est une grammaire basée sur les n-grammes, en particulier une grammaire basée sur les trigrammes.

6. Programme informatique avec moyens de codage de programme,
**caractérisé en ce que**
les moyens de codage de programme sont conçus pour la réalisation du procédé conformément à l'une des revendications précédentes si le programme informatique est exécuté avec un processeur.

7. Support de données avec un fichier programme stocké sur ce dernier, représentant un programme informatique conformément à la revendication n°6.

8. Support de données conformément à la revendication n°7,
**caractérisé en ce que**
la représentation de la grammaire stochastique est également mémorisée sur le support de données.

9. Support de données conformément à la revendication n°7,
**caractérisé en ce que**
des moyens de codage de programme pour l'élaboration de la grammaire indépendante du contexte sont également mémorisés sur le support de données.

10. Dispositif de reconnaissance vocale (30) pour l'attribution d'un symbole de sortie aux données vocales reçues, le dispositif de reconnaissance vocale (30) présentant les éléments suivants :
- un dispositif de réception (31) qui reçoit des données vocales qui représentent une expression vocale à reconnaître,
- une base de données lexicologique (32) dans laquelle une pluralité de jeux de données de référence est mémorisée ;
- un dispositif comparateur (33) qui compare les données vocales reçues avec la pluralité de jeux de données de référence et qui identifie au moins une hypothèse qui représente l'un des jeux de données de référence,
- un premier dispositif d'analyse de grammaire (34) qui détermine, pour chacune des hypothèses identifiées, un premier résultat de grammaire de l'hypothèse sur la base d'une grammaire indépendante du contexte (34),
- un deuxième dispositif d'analyse de grammaire (36) qui détermine, pour chacune des hypothèses identifiées, un deuxième résultat de grammaire de l'hypothèse sur la base d'une grammaire stochastique ;
- un dispositif de liaison (38) qui lie, pour chacune des hypothèses identifiées, le premier résultat de grammaire avec le deuxième résultat de grammaire pour le calcul du résultat total de l'hypothèse,
- un dispositif de décision (35) qui identifie l'hypothèse qui présente le résultat total maximal parmi les hypothèses identifiées et qui émet cette hypothèse comme symbole de sortie,
**caractérisé en ce que**
le premier dispositif d'analyse de grammaire (34) déterminant le premier résultat de grammaire comme première valeur prédéterminée dans le cas où l'hypothèse est reconnue comme non grammaticale sur la base de la grammaire indépendante du contexte et déterminant le premier résultat de grammaire comme deuxième valeur prédéterminée dans le cas où l'hypothèse est reconnue comme grammaticale sur la base de la grammaire indépendante du contexte.

11. Dispositif conformément à la revendication n°10,
**caractérisé en ce que**
la liaison est une multiplication.

12. Dispositif conformément à la revendication n°10,
**caractérisé en ce que**
la liaison est une liaison logique ET.

13. Dispositif conformément à l'une des revendications n°10 à n°12,
**caractérisé en ce que**
la grammaire stochastique est une grammaire basée sur les n-grammes, en particulier une grammaire basée sur les trigrammes.
